(19) Europäisches Patentamt
European Patent Office
Office européen des brevets

(11) **EP 3 628 859 B1**

(12) **FASCICULE DE BREVET EUROPEEN**

(45) Date de publication et mention
de la délivrance du brevet:
**09.06.2021 Bulletin 2021/23**

(51) Int Cl.:
***F03B 13/16*** (2006.01)     ***F03B 15/00*** (2006.01)

(21) Numéro de dépôt: **19197356.9**

(22) Date de dépôt: **13.09.2019**

(54) **PROCEDE DE COMMANDE D'UN SYSTEME HOULOMOTEUR PRENANT EN COMPTE LES INCERTITUDES**

STEUERUNGSVERFAHREN EINES WELLENKRAFTWERKS, DAS DIE UNSICHERHEITSFAKTOREN EINBEZIEHT

METHOD FOR CONTROLLING A WAVE ENERGY SYSTEM TAKING UNCERTAINTIES INTO ACCOUNT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2018 FR 1858714**

(43) Date de publication de la demande:
**01.04.2020 Bulletin 2020/14**

(73) Titulaire: **IFP Energies nouvelles 92852 Rueil-Malmaison Cedex (FR)**

(72) Inventeurs:
• **TONA, Paolino**
**92852 RUEIL-MALMAISON CEDEX (FR)**
• **NGUYEN, Hoai-Nam**
**92852 RUEIL-MALMAISON CEDEX (FR)**

(56) Documents cités:
• **FRANCESCO FUSCO ET AL: "A Simple and Effective Real-Time Controller for Wave Energy Converters", IEEE TRANSACTIONS ON SUSTAINABLE ENERGY, IEEE, USA, vol. 4, no. 1, 1 janvier 2013 (2013-01-01) , pages 21-30, XP011479415, ISSN: 1949-3029, DOI: 10.1109/TSTE.2012.2196717**

• **CHAIRY G ET AL: "SELF-ADAPTIVE CONTROL OF A PISTON WAVE ABSORBER", PROCEEDINGS OF THE INTERNATIONAL OFFSHORE AND POLAR ENGINEERINGCONFER, XX, XX, vol. 1, 24 mai 1998 (1998-05-24), pages 127-133, XP008003240,**

• **EDO ABRAHAM ET AL: "Optimal Active Control and Optimization of a Wave Energy Converter", IEEE TRANSACTIONS ON SUSTAINABLE ENERGY, IEEE, USA, vol. 4, no. 2, 1 avril 2013 (2013-04-01), pages 324-332, XP011497607, ISSN: 1949-3029, DOI: 10.1109/TSTE.2012.2224392**

• **Giorgio Bacelli ET AL: "A control system for a self-reacting point absorber wave energy converter subject to constraints", , 1 août 2011 (2011-08-01), XP055153399, DOI: 10.3182/20110828-6-IT-1002.03694 Extrait de l'Internet: URL:http://eprints.nuim.ie/3555 [extrait le 2019-02-20]**

• **TOM NATHAN ET AL: "Experimental Confirmation of Nonlinear-Model- Predictive Control Applied Offline to a Permanent Magnet Linear Generator for Ocean-Wave Energy Conversion", IEEE JOURNAL OF OCEANIC ENGINEERING, IEEE SERVICE CENTER, PISCATAWAY, NJ, US, vol. 41, no. 2, 1 avril 2016 (2016-04-01), pages 281-295, XP011606060, ISSN: 0364-9059, DOI: 10.1109/JOE.2015.2439871 [extrait le 2016-04-12]**

**Description**

Les ressources énergétiques renouvelables connaissent un fort intérêt depuis quelques années. Propres, gratuites et inépuisables, autant d'atouts majeurs dans un monde rattrapé par la diminution inexorable des ressources fossiles disponibles et prenant conscience de la nécessité de préserver la planète. Parmi ces ressources, l'énergie houlomotrice, source relativement méconnue au milieu de celles largement médiatisées comme l'éolien ou le solaire, contribue à la diversification indispensable de l'exploitation des énergies renouvelables. Les dispositifs, couramment appelés appareils "houlomoteurs", sont particulièrement intéressants, car ils permettent de produire de l'électricité à partir de cette source d'énergie renouvelable (l'énergie potentielle et cinétique des vagues), sans émission de gaz à effet de serre. Ils sont particulièrement bien adaptés pour fournir de l'électricité à des sites insulaires isolés.

Par exemple, les demandes de brevet FR 2876751, FR 2973448 et WO 2009/081042 décrivent des appareils pour capter l'énergie produite par le flot marin. Ces dispositifs sont composés d'un support flottant sur lequel est disposé un pendule monté mobile par rapport au support flottant. Le mouvement relatif du pendule par rapport au support flottant est utilisé pour produire de l'énergie électrique au moyen d'une machine de conversion de l'énergie (par exemple une machine électrique). La machine de conversion fonctionne en tant que générateur, pour produire un couple ou force qui résiste au mouvement du mobile et récupérer ainsi une puissance, et, en même temps, pour mettre le mobile en résonance avec les vagues.

Le mouvement des moyens mobiles est donc contrôlé par la machine de conversion de l'énergie pour favoriser la récupération d'énergie. Dans l'intention d'améliorer le rendement et donc la rentabilité des dispositifs pour convertir l'énergie des vagues en énergie électrique, de nombreux procédés de commande, de complexité et performances différentes, ont été proposés par le passé. L'objectif commun de ces procédés de commande est de générer le plus de puissance possible en agissant sur le système de prise de puissance (PTO, de l'anglais « power take-off system »), le système qui convertit l'énergie mécanique qui résulte de l'action des vagues en énergie électrique, c'est-à-dire la machine de conversion.

Les commandes « P » (Proportionnelle) et « PI » (Proportionnelle intégrale) sont les formes de commande les plus simples, et répandues, pour les systèmes houlomoteurs. Dans le premier cas, la force appliquée par le système de prise de puissance (PTO) ou convertisseur secondaire, à la partie mobile (un flotteur, par exemple) ou convertisseur primaire du système houlomoteur, est un simple retour proportionnel sur la vitesse de la partie mobile. Dans le deuxième cas, on rajoute un terme proportionnel au déplacement relatif (position) de la partie mobile. Les valeurs optimales des paramètres (gains) permettant de maximiser la récupération d'énergie pour une houle régulière (et, par extension, pour un état de mer dont on peut définir une fréquence dominante de la houle) peuvent être calculées de manière simple (analytique) dans le cas où on connait parfaitement la dynamique du système houlomoteur.

Par exemple, la commande « PI » est une approche bien connue pour la commande des systèmes houlomoteurs. Par exemple, le document Ringwood, J.V.. Control optimisation and parametric design, dans Numerical Modelling of Wave Energy Converters: State-of-the art techniques for single WEC and converter arrays (M. Folly Ed.), Elsevier, 2016 décrit une telle approche. Des versions adaptatives par rapport à l'état de mer (c'est-à-dire dont les paramètres varient par rapport à l'état de mer) ont été présentées dans la littérature, par exemple dans les documents suivants :

- Whittaker, T., Collier, D., Folley, M., Osterried, M., Henry, A., & Crowley, M. (2007, September). The development of Oyster-a shallow water surging wave energy converter. In Proceedings of the 7th European Wave and Tidal Energy Conference, Porto, Portugal (pp. 11-14).

- Hansen, Rico H and Kramer, Morten M., "Modelling and control of the Wavestar prototype". In: Proceedings of 2011 European Wave and Tidal Energy Conférence (2011)

- Hals, J., Faines, J. and Moan, T., "A Comparison of Selected Stratégies for Adaptive Control of Wave Energy Converters". In: J. Offshore Mech. Arct. Eng. 133.3 (2011)

Pour toutes ces méthodes, l'approche utilisée est le gain scheduling, ou pré programmation des gains : un jeu de gains ou paramètres optimaux (un gain pour la commande P, deux gains pour la commande PI) est calculé hors ligne, analytiquement ou numériquement, pour un ensemble d'états de mer, afin de remplir des cartographies (tableaux) de gains en fonction de l'état de mer. Pour les méthodes décrites dans ces documents, la mise à jour des gains PI s'effectue toujours à partir d'estimations moyennées, sur des fenêtres temporelles de plusieurs minutes (par exemple entre 10 et 30 minutes). Ces méthodes ne permettent donc pas d'adapter les gains « de vague à vague », c'est-à-dire à une fréquence qui est celle de la commande en temps réel (par exemple comprise entre 10 et 100 Hz, soit une période d'échantillonnage comprise entre 10 et 100 ms). Ainsi, le temps de réaction élevé de ces méthodes ne permet pas une commande optimale du système houlomoteur, la puissance récupérée n'est donc pas optimale.

De plus, dans cet art antérieur, il n'y a pas d'exemples de procédés de commande permettant de calculer les gains optimaux de lois de commande P ou PI, du point de vue de la maximisation de l'énergie récupérée, en présence d'incertitudes dans la dynamique du système houlomoteur, que ce soit dans le convertisseur primaire (partie mobile, comme un flotteur) ou dans le convertisseur secondaire (machine de conversion PTO).

Un exemple de procédé de commande d'un système houlomoteur maximisant la puissance générée, basé sur une formulation de commande prédictive par modèle, est décrit dans la demande de brevet du demandeur FR 3019235 (US 2017/0214347).

Un autre exemple de procédé de commande, permettant cette fois-ci de maximiser la puissance générée pour une structure de commande plus simple, celle dite proportionnelle intégrale (PI), de manière adaptative par rapport aux évolutions de l'état de la mer, est décrit dans la demande de brevet français du demandeur ayant le numéro de dépôt 17/52.337.

Dans les deux cas de figure, un modèle dynamique du système houlomoteur est utilisé pour synthétiser la commande. Si ce modèle dynamique n'est pas suffisamment fidèle (à la réalité) les performances du procédé de commande en seront affectés. En effet, les méthodes décrites dans ces demandes de brevet ne sont pas robustes vis-à-vis des incertitudes du système houlomoteur, que ce soit celles de la partie mobiles ou celle de la machine de conversion.

De plus, le document : Francesco Fuso et al. « A simple and effective real-time controller for wave energy converters », IEEE transactions on sustainable energy, IEEE, USA, vol. 4, no. 1, 1 janvier 2013 (2013-01-01), pages 21-30, décrit une stratégie de contrôle en temps réel d'un système houlomoteur.

Pour pallier ces inconvénients, la présente invention concerne un procédé de commande d'un système houlomoteur, dans lequel on détermine les gains d'une loi de commande ayant un composante proportionnelle (par exemple une loi de commande proportionnelle P ou proportionnelle-intégrale PI), de manière optimale en termes de récupération d'énergie, mais robuste vis-à-vis des incertitudes dans la dynamique du système houlomoteur, que ce soit celle de la partie mobile ou celle de la machine de conversion. Pour ce faire, on maximise la récupération d'énergie dans le pire cas décrit par les incertitudes, en résolvant un problème d'optimisation semi-définie positive (donc, convexe), pour lequel il existe une solution unique.

**Le procédé selon l'invention**

L'invention concerne un procédé de commande d'un système houlomoteur qui convertit l'énergie de la houle en énergie électrique ou hydraulique, ledit système houlomoteur comportant au moins un moyen mobile en liaison avec une machine de conversion de l'énergie, et ledit moyen mobile effectuant un mouvement oscillatoire par rapport à ladite machine de conversion. On réalise les étapes suivantes :

a) on mesure la position et/ou la vitesse et/ou l'accélération dudit moyen mobile ;
b) on estime la force exercée par la houle sur ledit moyen mobile au moyen de ladite mesure de ladite position et/ou de ladite vitesse dudit moyen mobile ;
c) on détermine au moins une fréquence dominante de la force exercée par ladite houle sur ledit moyen mobile, de préférence au moyen d'un filtre de Kalman non parfumé ;
d) on détermine une valeur de commande de ladite force exercée par ladite machine de conversion sur ledit moyen mobile pour maximiser la puissance générée par ladite machine de conversion en mettant en œuvre les étapes suivantes :

i) pour ladite au moins une fréquence dominante déterminée, on détermine la résistance et la réactance intrinsèques dudit moyen mobile et les intervalles d'incertitudes de la résistance et de la réactance intrinsèques de ladite machine de conversion ;
ii) on détermine au moins un coefficient d'une loi de commande à gain variable ayant une composante proportionnelle, au moyen d'une résolution d'un problème d'optimisation semi définie positive de ladite maximisation de ladite puissance générée par ladite machine de conversion, ledit problème d'optimisation semi définie positive prenant en compte lesdites résistances et réactance intrinsèques dudit moyen mobile et lesdits intervalles d'incertitudes de la résistance et de la réactance intrinsèques de ladite machine de conversion ; et

e) on commande ladite machine de conversion au moyen de ladite valeur de commande.

Selon un mode de réalisation, ledit problème d'optimisation semi définie positive optimise le pire cas de fonctionnement dudit système houlomoteur défini au moyen desdits intervalles d'incertitudes.

Conformément à une mise en œuvre, ledit problème d'optimisation semi définie positive détermine au moins l'impédance de ladite loi commande, et on détermine ledit coefficient d'une loi de commande à partir de ladite impédance de ladite loi de commande.

Avantageusement, on détermine ledit problème d'optimisation semi définie positive par une équation du type :

$$\min_{\gamma, R_c, X_c} \{\gamma\} \qquad , \qquad \text{tel que}$$

$$\begin{bmatrix} \gamma & R_i + R_m R_c - X_m X_c & X_i + R_m X_c + X_m R_c \\ R_i + R_m R_c - X_m X_c & R_m R_c - X_m X_c & 0 \\ X_i + R_m X_c + X_m R_c & 0 & R_m R_c - X_m X_c \end{bmatrix} \succcurlyeq 0,$$

$$\begin{bmatrix} \gamma & R_i + R_M R_c - X_M X_c & X_i + R_M X_c + X_M R_c \\ R_i + R_M R_c - X_M X_c & R_M R_c - X_M X_c & 0 \\ X_i + R_M X_c + X_M R_c & 0 & R_M R_c - X_M X_c \end{bmatrix} \succcurlyeq 0,$$

avec $R_i$ la résistance dudit moyen mobile, $X_i$ la réactance interne dudit moyen mobile, $R_m$ la borne inférieure de l'incertitude de la résistance de ladite machine de conversion, $R_M$ la borne supérieure de l'incertitude de la résistance de ladite machine de conversion, $R_c$ la partie réelle de l'impédance de ladite loi de commande, $X_c$ la partie imaginaire de l'impédance de ladite loi de commande, $X_m$ la borne inférieure de l'incertitude de la réactance interne de ladite machine de conversion, $X_M$ la borne supérieure de l'incertitude de la réactance interne de ladite machine de conversion.

De manière avantageuse, ladite loi de commande est une loi de commande proportionnelle, et on détermine ledit coefficient $K_p$ de ladite loi de commande par une équation du type $K_p^*(\widehat{\omega}_{ex}) = R_c^*(\widehat{\omega}_{ex})$ avec $\widehat{\omega}_{ex}$ la fréquence dominante de la houle déterminée, $K_p^*$ la valeur optimale dudit coefficient $K_p$ et $R_c^*$ la valeur optimale de la partie réelle de l'impédance de ladite loi de commande.

De préférence, ladite loi de commande proportionnelle s'écrit : $f_u(t) = K_p v(t)$ avec $f_u$ la force appliquée par ladite machine de conversion sur ledit moyen mobile, et v la vitesse dudit moyen mobile par rapport à ladite machine de conversion.

Alternativement, ladite loi de commande est une loi de commande proportionnelle-intégrale, et on détermine lesdits coefficients $K_p$ et $K_i$ de ladite loi de commande à partir des équations du type $\begin{cases} K_p^*(\widehat{\omega}_{ex}) = R_c^*(\widehat{\omega}_{ex}) \\ K_i^*(\widehat{\omega}_{ex}) = -\widehat{\omega}_{ex} X_c^*(\widehat{\omega}_{ex}) \end{cases}$

avec $\widehat{\omega}_{ex}$ la fréquence dominante de la houle déterminée, $K_p^*$ la valeur optimale dudit coefficient $K_p$, $R_c^*$ la valeur optimale de la partie réelle de l'impédance de ladite loi de commande, $K_i^*$ la valeur optimale dudit coefficient $K_i$ et $X_c^*$ la valeur optimale de la partie imaginaire de l'impédance de ladite loi de commande.

De préférence, ladite loi de commande PI s'écrit par une équation du type : $f_u(t) = K_p v(t) + K_i p(t)$ avec $f_u(t)$ la commande de la force exercée par ladite machine de conversion sur ledit moyen mobile, v(t) la vitesse dudit moyen mobile, p(t) la position dudit moyen mobile.

Selon un aspect, on maximise ladite puissance générée par ladite machine de conversion en prenant en compte le rendement de ladite machine de conversion.

Selon une caractéristique, on détermine la fréquence dominante de ladite force exercée par ladite houle sur ledit moyen mobile au moyen d'une modélisation de ladite force exercée par la houle sur ledit moyen mobile comme un signal sinusoïdal, ou comme la somme de deux signaux sinusoïdaux.

Conformément à un mode de réalisation, on estime la position et/ou la vitesse dudit moyen mobile en utilisant un modèle dynamique qui représente l'évolution de la position et de la vitesse du moyen mobile.

Avantageusement, ledit modèle dynamique comporte un modèle de la force de radiation.

Selon une mise en œuvre, ladite machine de conversion est une machine électrique ou une machine hydraulique.

En outre, l'invention concerne un système houlomoteur qui convertit l'énergie de la houle en énergie électrique ou hydraulique, ledit système houlomoteur comportant au moins un moyen mobile en liaison avec une machine de conversion de l'énergie, et ledit moyen mobile effectuant un mouvement oscillatoire par rapport à ladite machine de conversion. Ledit système houlomoteur comprend des moyens de commande du système houlomoteur apte à mettre en œuvre le procédé de commande selon l'une des caractéristiques précédentes.

**Présentation succincte des figures**

D'autres caractéristiques et avantages du procédé et du dispositif selon l'invention, apparaîtront à la lecture de la description ci-après d'exemples non limitatifs de réalisations, en se référant aux figures annexées et décrites ci-après.

La figure 1 illustre les étapes du procédé selon un mode de réalisation de l'invention.
La figure 2 illustre un système houlomoteur selon un exemple de réalisation.
La figure 3 illustre le diagramme de Bode de la fonction de transfert d'un système houlomoteur pour un exemple illustratif.
La figure 4 illustre les bornes supérieure et inférieure des incertitudes de la résistance de la machine de conversion pour l'exemple illustratif.
La figure 5 illustre les bornes supérieure et inférieure des incertitudes de la réactance interne de la machine de conversion pour l'exemple illustratif.
La figure 6 illustre un spectre d'une vague irrégulière utilisé pour l'exemple illustratif.
La figure 7 illustre l'énergie récupérée pour différentes réalisations de la dynamique de la machine de conversion dans les intervalles d'incertitudes pour l'exemple illustratif.
La figure 8 est une courbe comparative de l'énergie récupérée au moyen du procédé selon l'invention et au moyen d'un procédé selon l'art antérieur pour l'exemple illustratif.

**Description détaillée de l'invention**

L'invention concerne un procédé de commande d'un système houlomoteur qui comprend au moins un moyen mobile (par exemple un flotteur) qui coopère avec au moins une machine de conversion de l'énergie (également appelée PTO de l'anglais « Power Take-Off »). Le moyen mobile effectue un mouvement oscillatoire par rapport à la machine de conversion, sous l'action des vagues (ou houle) et de la machine de conversion. La machine de conversion convertit l'énergie mécanique du mouvement du moyen mobile en énergie électrique. Dans ce but, la machine de conversion peut être une simple machine électrique ou un dispositif plus complexe qui inclut d'autres machines, comme une machine hydraulique. La machine de conversion peut être considérée comme l'actionneur par lequel le système de commande pilote le fonctionnement du système houlomoteur.

Notations

Au cours de la description, les notations suivantes sont utilisées :

- $f_u$ : consigne de force à exercer par la machine de conversion sur le moyen mobile
- $f_{ex}$ : force exercée par la houle sur le moyen mobile
- $f_{pto}$ : force effectivement exercée par la machine de conversion sur le moyen mobile
- p : position du moyen mobile par rapport à son point d'équilibre
- v : vitesse du moyen mobile
- a : accélération du moyen mobile
- $\omega$ : fréquence angulaire d'oscillation du moyen mobile, pour laquelle on effectue les calculs des gains de la loi de commande optimale robuste
- M : masse du moyen mobile
- $Z_r$ : impédance de radiation, il s'agit d'un paramètre, fonction de la fréquence et déterminé expérimentalement ou issu du calcul des coefficients hydrodynamiques du moyen mobile, qui permet de rendre compte du phénomène de radiation, selon lequel le mouvement du moyen mobile dans l'eau crée une vague radiée qui l'amortit (c'est-à-dire qui amortit le mouvement)
- $K_h$ : coefficient de raideur hydrostatique
- $B_r$ : résistance de radiation, soit la partie réelle de l'impédance de radiation
- $M_r$ : masse ajoutée, il s'agit d'un paramètre, fonction de la fréquence et déterminé expérimentalement, ou issu du calcul des coefficients hydrodynamiques du moyen mobile, qui permet de rendre compte du phénomène qui augmente la masse équivalente du moyen mobile, à cause des particules d'eau qui sont entrainées par son mouvement
- $M_\infty$ : masse ajoutée à fréquence infiniment élevée
- $P_a$ : puissance moyenne générée par le système houlomoteur.
- $t$ : temps continu
- $\eta$ : rendement de la conversion de l'énergie, avec

- $\eta_p$ : rendement moteur de la machine de conversion, il s'agit d'une donnée constructeur ou d'une donnée déterminée expérimentalement
  - $\eta_n$ : rendement générateur de la machine de conversion, il s'agit d'une donnée constructeur ou d'une donnée déterminée expérimentalement

- $Z_i$ : impédance intrinsèque du moyen mobile du système houlomoteur, paramètre connu, fonction de la fréquence, issu de la modélisation du moyen mobile sur la base de la théorie linéaire des vagues, déterminé à partir des coefficients hydrodynamiques du moyen mobile et éventuellement de mesures expérimentales
- $R_i$ : résistance intrinsèque du moyen mobile du système houlomoteur, soit la partie réelle de l'impédance intrinsèque
- $X_i$ : réactance intrinsèque du moyen mobile du système houlomoteur, soit la partie imaginaire de l'impédance intrinsèque
- $R_{pto}$ : résistance intrinsèque de la machine de conversion
- $X_{pto}$ : réactance intrinsèque de la machine de conversion
- $K_p$ : coefficient de proportionnalité de la loi de commande P, PI, ou PID
- $K_i$ : coefficient intégral de la loi de commande PI ou PID
- $K_d$ : coefficient dérivé de la loi de commande PID
- $Z_c$ : impédance de la loi de commande (ou de charge)
- $R_c$ : résistance de la loi de commande (ou de charge), c'est-à-dire la partie réelle de l'impédance de la loi de commande
- $X_c$ : réactance de la loi de commande, c'est-à-dire la partie imaginaire de l'impédance de la loi de commande
- A : amplitude de la houle
- $\hat{\omega}_{ex}$ : estimation de la fréquence dominante de la vague
- $\hat{f}_{ex}$ : estimation de la force exercée par la vague sur le moyen mobile
- $R_m$ : borne inférieure de l'incertitude de la résistance intrinsèque de la machine de conversion
- $R_M$ : borne supérieure de l'incertitude de la résistance intrinsèque de la machine de conversion
- $X_m$ : borne inférieure de l'incertitude de la réactance intrinsèque de la machine de conversion
- $X_M$ : borne supérieure de l'incertitude de la réactance intrinsèque de la machine de conversion
- $R_{im}$ : borne inférieure de l'incertitude de la résistance intrinsèque du moyen mobile du système houlomoteur
- $R_{iM}$ : borne supérieure de l'incertitude de la résistance intrinsèque du moyen mobile du système houlomoteur
- $X_{im}$ : borne inférieure de l'incertitude de la réactance intrinsèque du moyen mobile du système houlomoteur
- $X_{iM}$ : borne supérieure de l'incertitude de la réactance intrinsèque du moyen mobile du système houlomoteur
- $\phi$ : déphasage du signal
- $T_s$ : période d'échantillonnage
- $P_x$ : matrice de covariance de x(k)
- k : temps discret

Pour ces notations, les valeurs estimées sont généralement marquées d'un accent circonflexe. Les valeurs marquées d'un astérisque correspondent aux valeurs optimales.

Dans la suite de la description et pour les revendications, les termes vagues, flots marins et houle sont considérés comme équivalents.

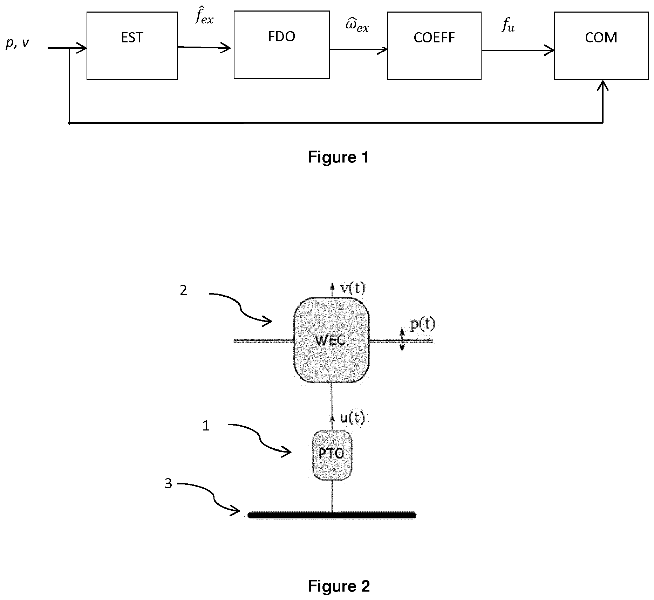

L'invention concerne un procédé de commande d'un système houlomoteur. La figure 1 représente les différentes étapes du procédé selon l'invention :

1. Mesure(s) de la position et/ou la vitesse du moyen mobile (p, v)
2. Estimation de la force exercée par les vagues *(EST)*
3. Détermination de la fréquence dominante (FDO)
4. Détermination de la valeur de commande (COEFF)
5. Commande de la machine de conversion (COM)

Les étapes 1 à 5 sont réalisées de préférence en temps réel, dans une boucle temps réel. Toutefois, selon un mode de réalisation de l'invention, la détermination de la valeur de commande peut comprendre des étapes réalisées préalablement.

De manière avantageuse, le procédé de commande selon l'invention peut être mis en œuvre par des moyens informatiques, par exemple un ordinateur. ou un processeur, en particulier un processeur embarqué.

Etape 1) Mesure(s) de la position et/ou la vitesse du moyen mobile (p,v)

Lors de cette étape, la position et/ou la vitesse du moyen mobile sont mesurées. La position correspond au mouvement (par exemple distance ou angle) par rapport à la position d'équilibre du moyen mobile. Ces mesures peuvent être réalisées au moyen de capteurs, généralement implémentés sur un système houlomoteur pour son contrôle et/ou sa supervision.

Selon une mise en œuvre de l'invention, lors de cette étape, on peut également mesurer ou estimer l'accélération du moyen mobile, car cette mesure ou estimation peut être utilisée dans les étapes suivantes du procédé selon l'invention. Par exemple, l'accélération peut être mesurée au moyen d'un accéléromètre placé sur le moyen mobile.

Etape 2) Estimation de la force exercée par la houle (EST)

Pour cette étape, on estime en temps réel la force exercée par la houle sur le moyen mobile. L'estimation de la houle est réalisée à partir des mesures disponibles (position et/ou vitesse et/ou accélération) obtenues à l'étape précédente. L'estimation de la force exercée par la houle sur le moyen mobile est réalisée en ligne et en temps réel, afin de pouvoir réaliser une commande en temps réel. Dans le but d'une commande ayant un temps de réponse optimal, on peut choisir une méthode d'estimation rapide.

Pour cette étape du procédé, tout type d'estimation de la force exercée par la houle sur le moyen mobile peut être envisagé.

Selon un mode de réalisation de l'invention, l'estimation de la force exercée par la houle sur le moyen mobile, peut être mise en œuvre au moyen d'un estimateur basé sur un modèle dynamique du système houlomoteur. Dans ce cas, on peut construire un modèle dynamique du système houlomoteur. Le modèle dynamique représente le comportement dynamique, traduisant le mouvement des éléments constituant le système houlomoteur sous l'action de la houle et sous l'action de la commande de force donnée à la machine de conversion. Le modèle dynamique est un modèle qui relie la vitesse du moyen mobile à la force exercée par les vagues sur le moyen mobile à la commande de force donnée à la machine de conversion qui est à son tour traduite en une force exercée par la dite machine de conversion sur le moyen mobile.

Conformément à un mode de réalisation de l'invention, le modèle de dynamique peut être obtenu par application du principe fondamental de la dynamique sur le moyen mobile du système houlomoteur. Pour cette application, on prend en compte notamment la force exercée par la houle sur le moyen mobile et la force exercée par la machine de conversion sur le moyen mobile.

Selon une mise en œuvre de l'invention, on peut considérer un système houlomoteur avec une partie flottante (moyen mobile) dont le mouvement oscillant de translation ou de rotation est contraint dans une seule dimension. On peut alors supposer que le mouvement de translation ou de rotation puisse être décrit par un modèle linéaire sous forme d'état qui inclut la dynamique du flotteur avec son interaction avec la houle et la dynamique du système de prise de puissance (PTO), ou machine de conversion, qui constitue l'actionneur du système.

Dans la suite de la description, seul un mouvement unidirectionnel est considéré pour le modèle dynamique. Toutefois, le modèle dynamique peut être développé pour un mouvement multidirectionnel.

Dans l'art antérieur, on considère généralement que la machine de conversion n'a pas de dynamique, soit $W_{pto}(j\omega) = 1$, $\forall \omega$, où $W_{pto}$ est la fonction de transfert entre $f_u$ et $f_{pto}$, ce qui simplifie considérablement le calcul de la valeur optimale de la consigne de force $f_u(t)$. Dans la réalité, suivant le type de machine de conversion utilisée, sa dynamique peut s'avérer être lente par rapport à celle du convertisseur primaire (moyen mobile) du système houlomoteur et ne peut être négligée. Selon l'invention, le modèle dynamique peut prendre donc en compte la dynamique de la machine de conversion dans la modélisation, sous la même forme fréquentielle que la dynamique principale du système houlomoteur :

$$W_{pto}(j\omega) = R_{pto}(\omega) + jX_{pto}(\omega)$$

Selon un exemple de réalisation, on peut estimer en temps-réel la force exercée par les vagues sur le moyen mobile en mettant en œuvre un procédé de détermination de la force d'excitation exercée par la houle incidente sur un moyen mobile d'un système houlomoteur au moyen d'un modèle de la force de radiation, tel que décrit dans la demande de brevet FR 3049989 (WO 2017/174244). Pour rappel, la force de radiation est la force appliquée sur le moyen mobile et générée par le mouvement même du moyen mobile, contrairement à la force d'excitation de la houle qui est générée par la houle uniquement.

Etape 3) Détermination de la fréquence dominante (FDO)

Lors de cette étape, on détermine au moins une fréquence dominante de la force exercée par la houle sur le moyen mobile (déterminée à l'étape précédente). On appelle fréquence dominante, la fréquence correspondante au pic (maximum) de son spectre.

Pour cette étape du procédé de commande selon l'invention, tout type de méthode de détermination de la fréquence dominante peut être envisagée.

Selon un mode de réalisation (et tel que décrit dans la demande de brevet français dont le numéro de dépôt est FR 17/52337), la fréquence dominante peut être déterminée au moyen d'un filtre de Kalman non parfumé (de l'anglais « unscented Kalman filter » UKF). Un filtre UKF est basé sur la théorie de la transformation « non parfumée », qui permet d'obtenir un estimateur pour un système non linéaire sans avoir besoin de le linéariser au préalable pour l'application du filtre. Le filtre UKF utilise une distribution statistique de l'état qui est propagée à travers les équations non linéaires. Un tel filtre présente l'avantage de permettre une stabilité, donc une robustesse de l'estimation.

Selon un mode de réalisation de l'invention, la force d'excitation de la vague peut être modélisée comme un signal sinusoïdal variant dans le temps :

$$f_{ex}(t) = A(t) \sin(\omega(t)t + \phi(t))$$

où $A(t)$, $\omega(t)$ et $\phi(t)$ sont respectivement l'amplitude, la fréquence et le déphasage du signal. Il s'agit d'une approximation, car cette force n'est pas en réalité une sinusoïde à paramètres variants. Dans la théorie linéaire des vagues, elle est plutôt modélisée comme une superposition de sinusoïdes à paramètres constants.

Alternativement, la force d'excitation de la vague peut être modélisée comme la somme de deux signaux sinusoïdaux variant dans le temps :

$$f_{ex}(t) = A_1(t) \sin(\omega_1(t) + \phi_1(t)) + A_2(t) \sin(\omega_2(t) + \phi_2(t))$$

Ces paramètres de la modélisation de la force d'excitation de la vague (variant dans le temps) sont à estimer. Puisqu'ils rentrent de manière non linéaire dans l'équation ci-dessus, il s'agit d'un problème d'estimation non linéaire.

La méthode du filtre de Kalman non parfumé (UKF, *Unscented Kalman Filter,* en anglais) peut être utilisée pour estimer $A(t)$, $\omega(t)$ et $\phi(t)$.

On note que d'autres méthodes d'estimations non linéaires peuvent, être utilisées pour réaliser cette étape tels que le filtre de Kalman étendu (EKF, *Extended Kalman Filter*) ou le filtre particulaire *(Particle Filter)*, mais l'UKF donne des résultats particulièrement bons. L'utilisation du filtre EKF en particulier a été évoquée dans la littérature dans ce but.

Pour appliquer l'UKF, on met d'abord l'équation modélisant la force d'excitation sous forme d'état et à temps discret.

Soit $T_s$ la période d'échantillonnage à laquelle le filtre devra tourner. La force d'excitation de la vague sera alors estimée au temps discret $t = kT_s$, $k = 0,1,2,...$, que l'on notera simplement **k.**

En définissant

$$\begin{cases} x_1(k) = A \sin(kT_s\omega + \phi), \\ x_2(k) = A \cos(kT_s\omega + \phi) \\ x_3(k) = \omega \end{cases}$$

et dans l'hypothèse que $\omega(k)$ change lentement dans le temps (par rapport à la période d'échantillonnage), on peut obtenir le modèle sous forme d'état suivant :

$$\begin{cases} \begin{bmatrix} x_1(k) \\ x_2(k) \\ x_3(k) \end{bmatrix} = \begin{bmatrix} \cos(T_s x_3(k-1)) & \sin(T_s x_3(k-1)) & 0 \\ -\sin(T_s x_3(k-1)) & \cos(T_s x_3(k-1)) & 0 \\ 0 & 0 & 1 \end{bmatrix} \begin{bmatrix} x_1(k-1) \\ x_2(k-1) \\ x_3(k-1) \end{bmatrix} + \begin{bmatrix} v_1(k-1) \\ v_2(k-1) \\ v_3(k-1) \end{bmatrix}, \\ f_{ex}(k) = \begin{bmatrix} 1 & 0 & 0 \end{bmatrix} \begin{bmatrix} x_1(k) \\ x_2(k) \\ x_3(k) \end{bmatrix} + \mu(k) \end{cases}$$

Dans ce modèle, des incertitudes ont été rajoutées pour prendre en compte les erreurs de modélisation. Plus particulièrement, $v_1(k\text{-}1)$ et $v_2(k\text{-}1)$ servent à pallier la nature variant dans le temps de $A(t)$, $\omega(t)$ et $\phi(t)$ qui n'est pas pris en compte dans la définition des états $x_1(k)$ et $x_2(k)$. $v_3(k\text{-}1)$ est une incertitude sur le troisième état (la fréquence à estimer), qui est naturellement corrélée avec $v_1(k\text{-}1)$ et $v_2(k\text{-}1)$. $\mu(k)$ est une incertitude que l'on peut assimiler à une erreur de mesure sur $f_{ex}(k)$, qui sert à prendre en compte le fait que $f_{ex}(k)$ n'est pas exactement une sinusoïde.

En notant

$$x(k) = [x_1(k) \quad x_2(k) \quad x_3(k)]^T,$$

$$v(k) = [v_1(k) \quad v_2(k) \quad v_3(k)]^T,$$

$$y(k) = f_{ex}(k)$$

et

$$\begin{cases} A_x = \begin{bmatrix} \cos(T_s x_3(k-1)) & \sin(T_s x_3(k-1)) & 0 \\ -\sin(T_s x_3(k-1)) & \cos(T_s x_3(k-1)) & 0 \\ 0 & 0 & 1 \end{bmatrix}, \\ C = [1 \quad 0 \quad 0] \end{cases}$$

les équations du modèle d'état s'écrivent :

$$\begin{cases} x(k) = A_x x(k-1) + v(k), \\ y(k) = Cx(k) + \mu(k) \end{cases}$$

On adopte les hypothèses suivantes :

- l'état initial x(0) est un vecteur aléatoire de moyenne $m(0) = E[x(0)]$ et covariance $P(0) = E[(x(0) - m(0))(x(0) - m(0))^T]$;
- $v(k)$ et $\mu(k)$ sont des bruits gaussiens avec matrices de covariance Q et R, respectivement ;

et les notations suivantes :

- $x(k|k-1)$ est l'estimation de $x(k)$ à partir des mesures jusqu'au temps $k - 1$, soit $y(k - 1)$, $y(k - 2)$, ...
- $x(k|k)$ est l'estimation de $x(k)$ à partir des mesures jusqu'au temps $k$, soit $y(k)$, $y(k - 1)$, ...
- $P_x(k|k-1)$ est la matrice de covariance de $x(k)$ à partir des mesures jusqu'au temps $k - 1$, soit $y(k - 1)$, $y(k - 2)$, ...
- $P_x(k|k)$ est la matrice de covariance de $x(k)$ à partir des mesures jusqu'au temps $k$, soit $y(k)$, $y(k - 1)$, ...

Il y a trois étapes dans la méthode UKF :

1. Calcul des points sigma

Dans cette première étape, on calcule un ensemble d'échantillons dans l'espace d'état, appelés points sigma, qui représentent bien la distribution probabiliste de l'état selon ses paramètres de moyenne et covariance.

Soient

$$W_0^m = \frac{\lambda}{n+\lambda},$$

$$W_0^c = \frac{\lambda}{n+\lambda} + (1 - \alpha^2 + \beta),$$

$$W_j^m = W_j^c = \frac{\lambda}{2(n+\lambda)}, \quad j = 1,2,...,2n$$

où $\lambda = (\alpha^2 - 1)n$ est un paramètre de mise à l'échelle, $\alpha$ est un paramètre qui détermine la diffusion des points sigma autour de $x(k - 1|k - 1)$ et auquel on donne généralement une petite valeur positive, par exemple $10^{-3}$, $\beta$ est un paramètre

utilisé pour incorporer la connaissance a priori de la distribution de x : pour une distribution gaussienne, $\beta = 2$ est optimal.

Au temps $k - 1$, on considère le choix suivant de points sigma (ensemble de points qui encodent de manière exacte les informations de moyenne et variance) :

$$x_0(k - 1) = x(k - 1|k - 1),$$

$$x_i(k - 1) = x(k - 1|k - 1) + \sqrt{n + \lambda}\, S_i(k - 1), i = 1, 2, \dots, n$$

$$x_{i+n}(k - 1) = x(k - 1|k - 1) - \sqrt{n + \lambda}\, S_i(k - 1), i = 1, 2, \dots, n$$

où $S_i(k$ - $1)$ est la i-ème colonne de la racine carrée matricielle de $P_x(k$ - $1|k$ - $1)$, soit $P_x(k|k$ - $1) = S(k$ - $1)^T S(k$ - $1)$

2. Mise à jour des prédictions

Chaque point sigma est propagé à travers le modèle non linéaire qui représente l'évolution des états :

$$x_j(k|k - 1) = A_x x_j(k - 1), \qquad j = 0, 1, \dots, 2n$$

La moyenne et la covariance de $\hat{x}(k|k$ - $1)$, la prédiction de $x(k|k$ - $1)$

$$\hat{x}(k|k - 1) = \sum_{j=0}^{2n} W_j^m \hat{x}_j(k|k - 1),$$

$$P_x(k|k - 1) = \sum_{j=0}^{2n} W_j^c \left( \hat{x}_j(k|k - 1) - x(k|k - 1) \right) \left( \hat{x}_j(k|k - 1) - x(k|k - 1) \right)^T + Q.$$

Les états prédits $\hat{x}_j(k|k$ - $1)$ sont utilisés dans l'équation d'état de sortie, ce qui donne :

$$\hat{y}_j(k|k - 1) = C \hat{x}_j(k|k - 1)$$

La moyenne et la covariance de $\hat{y}(k|k$ - $1)$ sont calculées comme

$$\hat{y}(k|k - 1) = \sum_{j=0}^{2n} W_j^m \hat{y}_j(k|k - 1),$$

$$P_y(k|k - 1) = \sum_{j=0}^{2n} W_j^c \left( \hat{y}_j(k|k - 1) - y(k|k - 1) \right) \left( \hat{y}_j(k|k - 1) - y(k|k - 1) \right)^T + R$$

tandis que la covariance croisée entre $\hat{x}(k|k$ - $1)$ et $\hat{y}(k|k$ - $1)$ est :

$$P_{xy}(k|k - 1) = \sum_{j=0}^{2n} W_j^c \left( \hat{x}_j(k|k - 1) - x(k|k - 1) \right) \left( \hat{y}_j(k|k - 1) - y(k|k - 1) \right)^T$$

3. Mise à jour à partir des mesures

Comme dans le filtre de Kalman, l'estimation finale de l'état est obtenue en corrigeant la prédiction avec une rétroaction sur l'erreur de prédiction sur la sortie (mesurée) :

$$\hat{x}(k) = \hat{x}(k|k-1) + K\big(\hat{y}(k) - \hat{y}(k|k-1)\big)$$

où le gain K est donné par

$$K = P_{xy}(k|k-1)P_y(k|k-1)^{-1}$$

La covariance a posteriori de l'estimation est mise à jour avec la formule suivante :

$$P_x(k|k) = P_x(k|k-1) - K P_y(k|k-1)K^T$$

Etape 4) Détermination de la valeur de commande (COEFF)

Lors de cette étape, on détermine la valeur de commande (consigne) de la force exercée par la machine de conversion sur le moyen mobile pour maximiser la puissance générée par la machine de conversion. Cette détermination est mise en œuvre au moyen d'une loi de commande à gains variables ayant a minima une composante proportionnelle, dont les coefficients (les gains variables) sont déterminés en fonction de la fréquence dominante de la force exercée par la houle sur le moyen mobile. On appelle une loi de commande ayant a minima une composante proportionnelle : une loi de commande proportionnelle P, une loi de commande proportionnelle-intégrale PI ou une loi de commande proportionnelle-intégrale-dérivée PID.

Selon l'invention, la détermination de la valeur de commande est mise en œuvre au moyen des étapes suivantes :

4.1) détermination de l'impédance du moyen mobile et des intervalles d'incertitudes de l'impédance de la machine de conversion

4.2) maximisation de l'énergie récupérée par la définition et résolution d'un problème d'optimisation semi-définie positive

*4. 1) détermination de l'impédance du moyen mobile et des intervalles d'incertitudes de l'impédance de la machine de conversion*

Lors de cette étape, on détermine l'impédance du moyen mobile (c'est-à-dire sa résistance et sa réactance intrinsèque), ainsi que les intervalles d'incertitudes l'impédance (c'est-à-dire sa résistance et sa réactance intrinsèque) de la machine de conversion.

On peut écrire un modèle dynamique force-vitesse de ce type de système sous forme fréquentielle, comme expliqué dans les textes de référence sur l'interaction entre vagues océaniques et systèmes oscillants (par exemple dans le document Faines, J. "Ocean waves and oscillating systems: linear interactions including wave energy extraction". Cambridge university press, 2002) :

$$\left(j\omega M + Z_r(j\omega) + \frac{K_h}{j\omega}\right)v(j\omega) = f_{ex}(j\omega) - f_{pto}(j\omega)$$

$$f_{pto}(j\omega) = W_{pto}(j\omega)f_u(j\omega)$$

Ce modèle est issu de l'équation intégro-différentielle de Cummins, et ses coefficients $K_h$ et $Z_r(j\omega)$ (et ceux qui sont issus de sa décomposition, ci-après) peuvent être calculés à l'aide de codes d'hydrodynamique basés sur la méthode des éléments frontières (BEM), tels que WAMIT, Diodore ou NEMOH. L'impédance de radiation $Z_r(j\omega)$, qui, dans la théorie linéaire des vagues, décrit l'effet du mouvement libre du flotteur dans l'eau, est le résultat d'une approximation de la réponse impulsionnelle de radiation par un filtre à réponse impulsionnelle infinie. Elle peut être décomposée comme il suit :

$$Z_r(j\omega) = B_r(\omega) + j\omega(M_r(\omega) + M_\infty)$$

La vitesse du flotteur, en fonction des forces qui lui sont appliquées, peut se récrire :

$$v(j\omega) = \frac{1}{Z_i(j\omega)}\left(f_{ex}(j\omega) - W_{pto}(j\omega)f_u(j\omega)\right)$$

où l'impédance intrinsèque $Z_i(j\omega)$ est définie comme

$$Z_i(j\omega) = j\omega M + MZ_r(j\omega) + \frac{K_h}{j\omega}$$
$$= B_r(\omega) + j\omega\left(M + M_\infty + M_r(\omega) - \frac{K_h}{\omega^2}\right)$$
$$= R_i(\omega) + jX_i(\omega)$$

où

$$\begin{cases} R_i(\omega) = B_{pa}(\omega) \\ X_i(\omega) = \omega\left(M + M_\infty + M_r(\omega) - \frac{K_h}{\omega^2}\right) \end{cases}$$

sont respectivement la résistance et la réactance (partie réelle et partie imaginaire de l'impédance) intrinsèques de la partie mobile du système houlomoteur.

On cherche à optimiser les performances de la loi de commande à laquelle nous nous intéressons, en termes de maximisation de la puissance produite en moyenne $P_a$ :

$$P_a = \frac{1}{T}\int_{t=0}^{T} f_{pto}(t)v(t)dt$$

On peut noter que, dans cette définition, c'est la puissance mécanique extraite par le convertisseur primaire qui est maximisée. Pour une loi de commande P, elle correspond à la puissance électrique produite par la machine de conversion, quel que soit son rendement. Conformément à une mise en œuvre de l'invention, pour une loi de commande PI, la puissance électrique peut être maximisée en négligeant les pertes de conversion mécanique-électrique dans la machine de conversion.

Dans l'art antérieur, on considère généralement que la machine de conversion n'a pas de dynamique, soit $W_{pto}(j\omega) = 1$, $\forall \omega$, où $W_{pto}$ est la fonction de transfert entre $f_u$ et $f_{pto}$ ce qui simplifie considérablement le calcul de la valeur optimale de la consigne de force $f_u(t)$. Dans la réalité, suivant le type de machine de conversion utilisée, sa dynamique peut s'avérer être lente par rapport à celle du convertisseur primaire (moyen mobile) du système houlomoteur et ne peut être négligée. Selon l'invention, on prend donc en compte la dynamique de la machine de conversion dans la modélisation, sous la même forme fréquentielle que la dynamique principale du système houlomoteur :

$$W_{pto}(j\omega) = R_{pto}(\omega) + jX_{pto}(\omega)$$

Pour cela, on peut décrire les incertitudes sur la dynamique dans le domaine fréquentiel comme il suit :

• Pour la machine de conversion :

$$\begin{cases} R_{pto}(\omega) \in [R_m(\omega), R_M(\omega)] \\ X_{pto}(\omega) \in [X_m(\omega), X_M(\omega)] \end{cases}$$

• Pour le moyen mobile du système houlomoteur :

$$\begin{cases} R_i(\omega) \in [R_{im}(\omega), R_{iM}(\omega)] \\ X_i(\omega) \in [X_{im}(\omega), X_{iM}(\omega)] \end{cases}$$

Les bornes des intervalles des incertitudes peuvent être identifiées expérimentalement. Alternativement, les bornes des intervalles des incertitudes peuvent être estimées pour un modèle donné.

*4.2) maximisation de l'énergie récupérée par un problème d'optimisation semi-définie positive*

Lors de cette étape, on détermine au moins un coefficient de la loi de commande à gains variables ayant une composante proportionnelle. Le coefficient de la loi de commande est déterminé de manière à maximiser la puissance générée par la machine de conversion. Cette maximisation est mise en œuvre au moyen d'un problème d'optimisation semi-définie positive SDP, qui notamment prend en comptes les intervalles d'incertitudes.

L'optimisation semi-définie positive, est un type d'optimisation convexe, qui étend l'optimisation linéaire. Dans un problème d'optimisation SDP, l'inconnue est une matrice symétrique que l'on impose d'être semi-définie positive. Comme en optimisation linéaire, le critère à minimiser est linéaire et l'inconnue doit également satisfaire une contrainte affine. Un tel problème d'optimisation SPD permet de résoudre la maximisation de la puissance générée, car la fonction coût originairement utilisée pour cette maximisation n'est ni concave ni convexe (donc difficile à résoudre) en raison de la prise en compte de la dynamique de la machine de conversion et des intervalles d'incertitudes.

De plus, la prise en compte des incertitudes par une loi de commande ayant a minima une composante proportionnelle permet de former une commande robuste (moins sensible aux incertitudes), ce qui permet d'optimiser la récupération d'énergie quel que soit le fonctionnement du système houlomoteur.

De manière avantageuse, le problème d'optimisation semi-définie positive peut optimiser le pire cas de fonctionnement du système houlomoteur parmi tous les comportements possibles du système induits par les incertitudes dynamiques définies auparavant.

Conformément à une mise en œuvre de l'invention, on détermine, au moyen du problème d'optimisation semi-définie positive au moins l'impédance de ladite loi de commande, puis on détermine le(s) coefficient(s) de la loi de commande à partir de l'impédance de la loi de commande.

Selon un aspect de l'invention, l'optimisation semi-définie positive peut être mise en œuvre au moyen du complément de Schur, qui permet notamment d'écrire les contraintes sous la forme d'une inégalité matricielle linéaire ou LMI (de l'anglais « Linear matricial inequality »), ce qui facilite la résolution de l'optimisation. De cette manière, le temps de calcul est limité, permettant ainsi de réaliser la commande en temps réel.

Un exemple de réalisation de cette étape est décrit ci-dessous.

Selon un premier mode de réalisation de l'invention, la loi de commande pour le contrôle hydrodynamique d'un système houlomoteur peut être une loi de commande proportionnelle P qui peut s'écrire :

$$f_u(t) = K_p v(t)$$

Selon un deuxième mode de réalisation de l'invention, la loi de commande pour le contrôle hydrodynamique d'un système houlomoteur peut être une loi de commande proportionnelle-intégrale PI qui peut s'écrire :

$$f_u(t) = K_p v(t) + K_i \int_0^t v(\tau) d\tau$$

Soit, fréquence par fréquence, pour la loi de commande P :

$$f_u(j\omega) = K_p v(j\omega)$$

ou, pour la loi de commande PI,

$$f_u(j\omega) = K_p v(j\omega) + \frac{K_i}{j\omega} v(j\omega)$$

où les paramètres $K_p$ et $K_i$ sont calculés en fonction de la fréquence dominante de la force d'excitation de la vague (déterminée à l'étape 3)), de manière à garantir que la puissance produite soit maximisée pour cette fréquence, dans le pire cas parmi tous les comportements possibles du système induits par les incertitudes dynamiques définies auparavant.

La maximisation de la puissance produite peut se faire sur la base d'une expression analytique qui relie, fréquence par fréquence, cette puissance à la partie réelle (résistance) et à la partie imaginaire (réactance) de l'impédance réalisée par la loi de commande, dans l'hypothèse où la force appliquée par la machine de conversion soit une rétroaction linéaire sur la vitesse du moyen mobile du système houlomoteur (cas général d'une loi de commande P, PI ou PID) :

$$f_u(j\omega) = Z_c(j\omega)v(j\omega) = (R_c(\omega) + jX_c(\omega))v(j\omega)$$

où

$$\begin{cases} R_c = \text{Re}\{Z_c\} \\ X_c = \text{Im}\{Z_c\} \end{cases}$$

sont la résistance et la réactance de l'impédance de la loi de commande (ou de charge) à une fréquence donnée (la fréquence dominante de la force d'excitation de la vague).

L' expression analytique de la puissance électrique à cette fréquence peut s'écrire :

$$P_a = \frac{A^2\left(R_{pto}R_c - X_{pto}X_c\right)}{2\left(\left(R_i + R_{pto}R_c - X_{pto}X_c\right)^2 + \left(X_i + R_{pto}X_c + X_{pto}R_c\right)^2\right)}$$

où $R_i$ et $X_i$ sont calculés à la fréquence en question à partir du modèle du système houlomoteur, le paramètre A peut être issu de l'estimation de la force de la vague (mais, comme montré ci-après, il n'est pas nécessaire de le calculer), $R_{pto}$ et $X_{pto}$ sont des paramètres incertains bornés dans et $R_c$ et $X_c$ sont à déterminer pour cette même fréquence en résolvant le problème d'optimisation suivant :

$$\max_{R_c,X_c} \min_{R_{PTO},X_{pto}} \frac{R_{pto}R_c - X_{pto}X_c}{\left(R_i + R_{pto}R_c - X_{pto}X_c\right)^2 + \left(X_i + R_{pto}X_c + X_{pto}R_c\right)^2}$$

qui correspond à maximiser la puissance définie ci-dessus. Notons que le paramètre A peut être omis car il n'influence pas la solution optimale.

Ce problème d'optimisation est difficile à résoudre, parce que la fonction de coût n'est pas convexe ou concave partout et les paramètres $R_{pto}$ et $X_{pto}$ ne sont pas connus avec précision (on fait juste l'hypothèse qu'ils sont compris dans un certain intervalle). Afin de rendre ce problème traitable, on le transforme en un problème d'optimisation semi-définie positive (convexe, donc).

Pour chaque fréquence dominante de houle et chaque $R_{pto}$ et $X_{pto}$, on impose la condition suivante

$$R_{pto}R_c - X_{pto}X_c > 0$$

afin que la puissance moyenne extraite soit positive. Cette condition est satisfaite si et seulement si

$$\begin{cases} R_m R_c - X_m X_c > 0 \\ R_M R_c - X_M X_c > 0 \end{cases}$$

Avec ces contraintes, le coût défini auparavant est positif, et il est possible de résoudre un problème d'optimisation min-max équivalent avec l'inverse de la fonction de coût :

$$\min_{R_c, X_c} \max_{R_{PTO}, X_{pto}} \frac{\left(R_i + R_{pto}R_c - X_{pto}X_c\right)^2 + \left(X_i + R_{pto}X_c + X_{pto}R_c\right)^2}{R_{pto}R_c - X_{pto}X_c}$$

On peut montrer que ce type de fonction de coût, quadratique sur linéaire, est convexe. Le problème min-max peut donc être converti en un problème d'optimisation convexe, défini comme il suit, pour chaque $R_c$ et chaque $X_c$ :

$$\min_{\gamma, R_c, X_c} \{\gamma\}, \text{ tel que } \gamma \geq \frac{\left(R_i + R_{pto}R_c - X_{pto}X_c\right)^2 + \left(X_i + R_{pto}X_c + X_{pto}R_c\right)^2}{R_{pto}R_c - X_{pto}X_c}$$

Bien que convexe, il s'agit toujours d'un problème difficile à résoudre à cause des paramètres incertains $R_{pto}$ et $X_{pto}$.

Pour attaquer ce problème, on réalise une optimisation semi-définie positive, qui est une extension de la programmation linéaire LP, et qui consiste à optimiser une fonction sous des contraintes définies par des inégalités matricielles linéaires LMI.

Une LMI est une condition de la forme :

$F(x) > 0$ (les notations $> 0$ et $\geqslant 0$ indiquent que la matrice **F** est respectivement définie ou semi-définie positive) où x est un vecteur de dimension **n,** et la matrice $F(x)$ est affine en **x,** c'est-à-dire :

$$F(x) = F_0 + \sum_{i=1}^{n} F_i \, x_i$$

où $F_i$ sont des matrices symétriques de dimension **m** x **m.**

L'intérêt de définir des problèmes basés sur des LMI est qu'il existe aujourd'hui beaucoup d'outils de calcul disponibles, permettant de résoudre ces problèmes rapidement (en temps polynomial, c'est-à-dire qui ne se bloque avec la taille du problème), tels que YALMIP et CVX.

Un outil mathématique adapté pour traiter les LMI est le complément de Schur, qui indique que l'inégalité matricielle non linéaire suivante :

$$\begin{cases} R(x) \succ 0, \\ P(x) - Q(x)^T R(x)^{-1} Q(x) \succ 0 \end{cases}$$

peut être écrite de manière équivalente sous la forme LMI :

$$\begin{bmatrix} P(x) & Q(x)^T \\ Q(x) & R(x) \end{bmatrix} \succ 0$$

Pour le procédé selon l'invention, le complément de Schur permet notamment d'écrire les contraintes

$$\gamma \geq \frac{\left(R_i + R_{pto}R_c - X_{pto}X_c\right)^2 + \left(X_i + R_{pto}X_c + X_{pto}R_c\right)^2}{R_{pto}R_c - X_{pto}X_c}$$

sous la forme LMI

$$\begin{bmatrix} \gamma & R_i + R_{pto}R_c - X_{pto}X_c & X_i + R_{pto}X_c + X_{pto}R_c \\ R_i + R_{pto}R_c - X_{pto}X_c & R_{pto}R_c - X_{pto}X_c & 0 \\ X_i + R_{pto}X_c + X_{pto}R_c & 0 & R_{pto}R_c - X_{pto}X_c \end{bmatrix} \succcurlyeq 0,$$

Cette condition est satisfaite si et seulement si les deux conditions suivantes, qui font apparaitre les bornes $R_m$, $R_M$, $X_m$ et $X_M$ des intervalles d'incertitude des paramètres $R_{pto}$ et $X_{pto}$, sont satisfaites :

$$\begin{bmatrix} \gamma & R_i + R_m R_c - X_m X_c & X_i + R_m X_c + X_m R_c \\ R_i + R_m R_c - X_m X_c & R_m R_c - X_m X_c & 0 \\ X_i + R_m X_c + X_m R_c & 0 & R_m R_c - X_m X_c \end{bmatrix} \succcurlyeq 0,$$

$$\begin{bmatrix} \gamma & R_i + R_M R_c - X_M X_c & X_i + R_M X_c + X_M R_c \\ R_i + R_M R_c - X_M X_c & R_M R_c - X_M X_c & 0 \\ X_i + R_M X_c + X_M R_c & 0 & R_M R_c - X_M X_c \end{bmatrix} \succcurlyeq 0$$

En prenant ces deux conditions comme contraintes pour $\underset{\gamma, R_c, X_c}{\min} \{\gamma\}$ on obtient un problème d'optimisation SDP (semi-définie positive), que l'on peut résoudre rapidement, notamment avec les logiciels mentionnés auparavant.

On peut résumer les étapes de détermination des coefficients de la loi de commande robuste, de la manière suivante :

I. On calcule la résistance $R_c^*$ et de la réactance $X_c^*$ de la commande optimale robuste :

1. On sélectionne un ensemble de fréquences représentatives $0 < \omega_1 < \cdots < \omega_N$, ces fréquences représentatives correspondent à un ensemble de fréquences qui couvre la gamme des fréquences dominantes des états de mer dans lesquels le système houlomoteur est censé travailler.

2. Pour chaque fréquence dans cet ensemble

1.1. On calcule la résistance et la réactance intrinsèque $R_i$ et $X_i$ du convertisseur primaire (partie mobile) du système houlomoteur 1.2. On identifie les bornes $R_m$, $R_M$, $X_m$ et $X_M$ des intervalles d'incertitude des paramètres incertains de la machine de conversion

1.3. On calcule $R_c^*$ et $X_c^*$ en résolvant le problème d'optimisation semi-définie positive

$$\underset{\gamma, R_c, X_c}{\min} \{\gamma\}, \text{ tel que } \begin{aligned} & \begin{bmatrix} \gamma & R_i + R_m R_c - X_m X_c & X_i + R_m X_c + X_m R_c \\ R_i + R_m R_c - X_m X_c & R_m R_c - X_m X_c & 0 \\ X_i + R_m X_c + X_m R_c & 0 & R_m R_c - X_m X_c \end{bmatrix} \succcurlyeq 0, \\ & \begin{bmatrix} \gamma & R_i + R_M R_c - X_M X_c & X_i + R_M X_c + X_M R_c \\ R_i + R_M R_c - X_M X_c & R_M R_c - X_M X_c & 0 \\ X_i + R_M X_c + X_M R_c & 0 & R_M R_c - X_M X_c \end{bmatrix} \succcurlyeq 0, \end{aligned}$$

II. On détermine les coefficients de la loi de commande

Pour une loi de commande de type proportionnelle P, dont l'impédance de commande est $Z_c(j\omega) = K_p$, la valeur optimale du gain proportionnel est : $K_p^*(\hat{\omega}_{ex}) = R_c^*(\hat{\omega}_{ex})$ pour la fréquence dominante de la houle estimée $\hat{\omega}_{ex}$.

Pour une loi de commande de type proportionnelle-intégrale PI, dont l'impédance de commande est $Z_c(j\omega) = K_p + \frac{K_i}{j\omega}$, les valeurs optimales des gains sont

$$\begin{cases} K_p^*(\hat{\omega}_{ex}) = R_c^*(\hat{\omega}_{ex}) \\ K_i^*(\hat{\omega}_{ex}) = -\hat{\omega}_{ex} X_c^*(\hat{\omega}_{ex}) \end{cases}$$

Selon un mode de réalisation de l'invention, cette étape 4) peut prendre en compte le rendement de la machine de conversion de manière à obtenir une commande plus précise du système houlomoteur.

En particulier, dans le cas de la commande proportionnelle P, maximiser la puissance mécanique moyenne (comme requis par le critère utilisé pour la synthèse de la loi de commande) correspond à maximiser également la puissance électrique moyenne produite. En revanche, dans le cas de la commande proportionnelle-intégrale PI, ceci est vrai seulement si l'on peut considérer le rendement de conversion de la machine de conversion idéal. Si cette approximation n'est pas réaliste, on peut maximiser

$$P_e = \frac{1}{T} \int_{t=0}^{T} \eta \, f_u(t) v(t) dt$$

en introduisant un coefficient $\eta$ qui représente le rendement de la machine de conversion, que l'on peut définir comme une fonction de la puissance mécanique instantanée

$$\eta(f_{pto}v) = \begin{cases} \eta_p \text{ si } f_{pto}v \geq 0 \\ \eta_n \text{ si } f_{pto}v < 0 \end{cases}$$

On peut en principe trouver aussi une loi de commande proportionnelle-intégrale PI robuste qui maximise l'énergie électrique produite dans le pire cas défini par les incertitudes sur la dynamique de la machine de conversion (ou de la partie mobile du système houlomoteur), en présence d'un rendement de la machine de conversion non idéal.

Etape 5) Commande de la machine de conversion (COM)

Lors de cette étape, on commande la machine de conversion en fonction de la valeur déterminée lors de l'étape précédente. Pour cela, on actionne la machine de conversion (machine électrique ou hydraulique) pour qu'elle reproduise la nouvelle valeur de la consigne de force $f_u$ de la machine de conversion sur le moyen mobile telle que déterminée à l'étape 4).

Par exemple, on peut appliquer au système de commande de la machine électrique la nouvelle expression de la commande de la force $f_u$ qui permet d'obtenir une force $f_{pto}$ exercée par la machine de conversion sur le moyen mobile. La commande de la machine électrique pour qu'elle applique la force $f_{pto}$ correspondante, à la dynamique de la machine près, à la commande $f_u$ demandée, est effectuée en modifiant, le cas échéant, le courant électrique appliqué à la machine électrique. De manière plus détaillée, pour fournir un couple ou force qui entraîne le moyen mobile, on applique un courant en fournissant une puissance électrique. En revanche, pour produire un couple ou force qui résiste au mouvement du moyen mobile, on applique un courant en récupérant une puissance électrique.

En outre, l'invention concerne un système houlomoteur qui convertit l'énergie de la houle en énergie électrique ou hydraulique. Le système houlomoteur comporte au moins un moyen mobile en liaison avec une machine de conversion de l'énergie, et le moyen mobile effectuant un mouvement oscillatoire par rapport à ladite machine de conversion. Selon l'invention, le système houlomoteur comporte des moyens de commande du système houlomoteur apte à mettre en œuvre le procédé de commande selon l'une quelconque des combinaisons de variantes décrites ci-dessus.

Selon un mode de réalisation de l'invention, le moyen de commande est un moyen informatique.

Un exemple non limitatif d'un système houlomoteur est une bouée oscillante telle que représentée sur la figure 2. Ce système houlomoteur comprend une bouée 2 en tant que moyen mobile de masse m, une machine de conversion 1 avec sa loi de commande. La bouée est soumise à un mouvement oscillatoire par les vagues (qui génère un déplacement p de vitesse v de la bouée 2) et par la force u appliquée par la machine de conversion 1. La machine de conversion 1 peut être une machine électrique reliée à un réseau électrique 3.

Exemple d'application

Les caractéristiques et avantages du procédé selon l'invention apparaîtront plus clairement à la lecture de l'exemple d'application ci-après.

Pour cet exemple, on considère un flotteur tel que décrit en figure 2, et dont la dynamique force-vitesse (réponse en vitesse à la somme des forces appliquées au flotteur) est donnée par la fonction de transfert suivante :

$$Z_i(s) = \frac{s^6 + 208.6s^5 + 8.583 \cdot 10^4 s^4 + 8.899 \cdot 10^6 s^3 + 1.074 \cdot 10^8 s^2 + 7.031 \cdot 10^8 s}{1.44 s^7 + 300.4 s^6 + 1.237 \cdot 10^5 s^5 + 1.284 \cdot 10^7 s^4 + 1.652 \cdot 10^8 s^3 + 2.106 \cdot 10^9 s^2 + 9.988 \cdot 10^9 s + 6.539 \cdot 10^{10}}$$

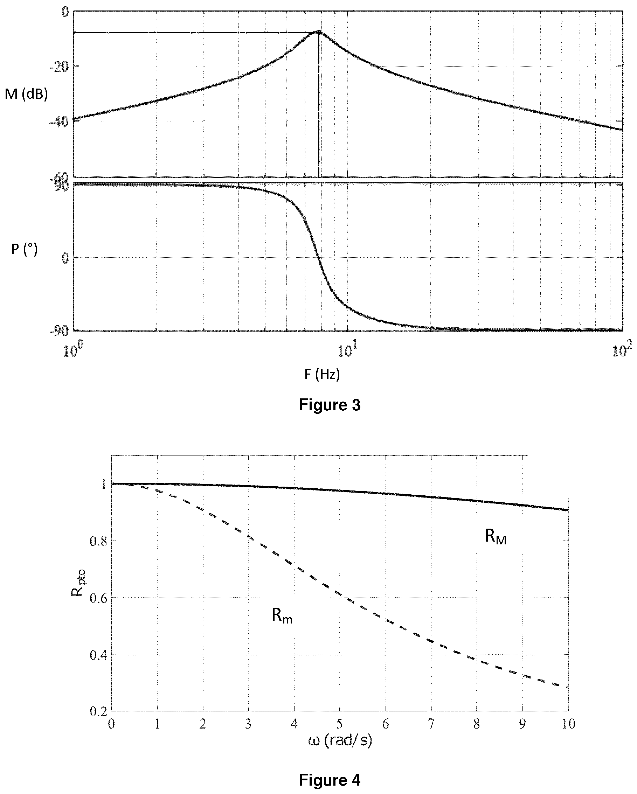

Cette fonction donne le diagramme de Bode de la figure 3. La partie haute de la figure 3 est une courbe de l'amplitude M en dB en fonction de la fréquence F en Hz. La partie basse de la figure 3 est une courbe du déphasage P en ° (degrés) en fonction de la fréquence F en Hz. Il s'agit d'un diagramme de Bode typique pour un système houlomoteur de type absorbeur ponctuel. La fonction de transfert décrit la dynamique d'un prototype à petite échelle (1:20) sur lequel le procédé a été appliqué.

La dynamique de la machine de conversion PTO est décrite par une fonction de transfert du premier ordre :

$$W_{pto}(j\omega) = \frac{1}{j\omega\tau + 1}$$

dont la constante de temps est comprise dans l'intervalle

$$\tau \in \left[\frac{1}{10\pi}, \frac{1}{2\pi}\right]$$

avec une valeur nominale

$$\tau_0 = \frac{1}{6\pi}$$

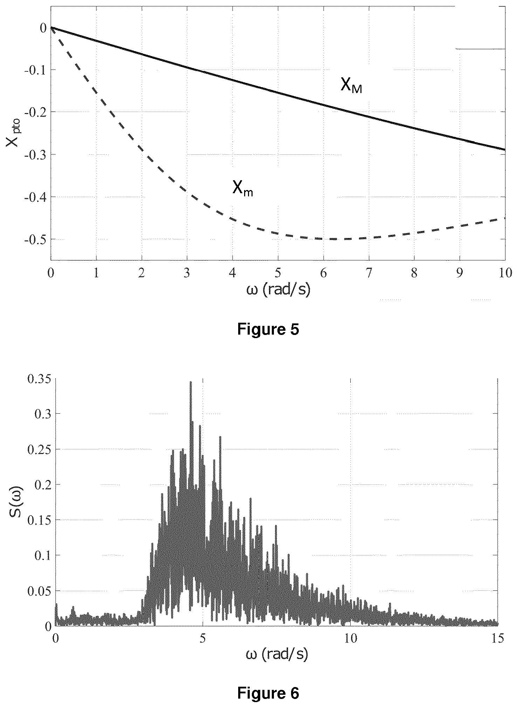

A partir des bornes sur $\tau$ on peut calculer les bornes sur la partie réelle et la partie imaginaire de $W_{pto}(j\omega)$ (figures 4 et 5, respectivement).

En effet, la figure 4 représente la partie réelle $R_{pto}$ de l'impédance de la machine de conversion en fonction de la vitesse angulaire du moyen mobile $\omega$ en rad/s. La courbe $R_M$ représente la borne supérieure de la partie réelle de l'impédance et la courbe $R_m$ représente la borne inférieure de la partie réelle de l'impédance.

De plus, la figure 5 représente la partie imaginaire $X_{pto}$ de l'impédance de la machine de conversion en fonction de la fréquence angulaire d'oscillation $\omega$ en rad/s. La courbe $X_M$ représente la borne supérieure de la partie imaginaire de l'impédance et la courbe $X_m$ représente la borne inférieure de la partie imaginaire de l'impédance.

On remarque que les intervalles des incertitudes varient fortement.

Ces intervalles d'incertitudes permettent de calculer les valeurs optimales des gains $K_p$ et $K_i$ en fonction de la fréquence en appliquant le procédé de l'invention.

Pour montrer l'intérêt de l'invention, on compare par simulation les résultats obtenus avec la commande PI robuste selon l'invention à ceux obtenus par une commande PI selon l'art antérieur conçue à partir de la dynamique nominale de la machine de conversion, pour différentes réalisations de cette dynamique, sur un état de mer donné.

La figure 6 donne le spectre S d'un état de mer donné pour les simulations en fonction de la vitesse angulaire du moyen mobile $\omega$ en rad/s.

On applique le procédé selon l'invention pour différentes réalisations de la dynamique de la machine de conversion dans les intervalles d'incertitudes illustrées sur les figures 4 et 5 et pour l'état de mer correspondant au spectre de la figure 6.

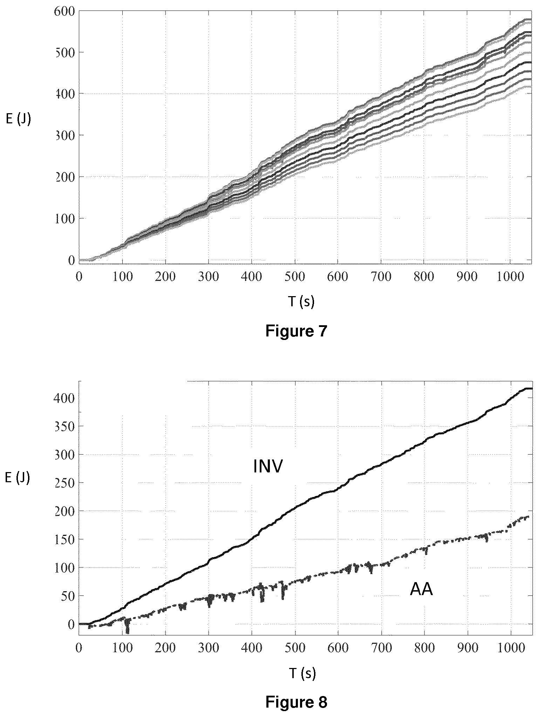

La figure 7 illustre l'énergie récupérée E en J en fonction du temps T en secondes (s) pour les différentes réalisations (chaque courbe correspond à une réalisation de la dynamique de la machine de conversion), les différentes réalisations étant incluses dans les intervalles d'incertitudes illustrées sur les figures 4 et 5. Le procédé selon l'invention permet donc une optimisation de l'énergie récupérée pour toutes les réalisations, c'est-à-dire dans tous les cas de fonctionnement du système houlomoteur. Le procédé selon l'invention permet donc une commande robuste du système houlomoteur. De plus, on peut remarquer que l'énergie récupérée dans le meilleur cas est presque 50 % supérieure que l'énergie récupérée dans le pire cas.

On compare ensuite le procédé selon l'invention au procédé selon l'art antérieur pour le pire cas. La figure 8 illustre l'énergie récupérée E en J en fonction du temps T en s pour l'état de mer illustré à la figure 6 pour le pire cas de fonctionnement du système houlomoteur parmi tous les comportements possibles du système induits par les incertitudes dynamiques. Les courbes de la figure 8 correspondent à l'énergie récupérée pour le procédé de commande robuste selon l'invention INV, et pour le procédé de commande proportionnelle-intégrale PI selon l'art antérieur AA conçue à partir de la dynamique nominale de la machine de conversion. On remarque que l'énergie récupérée par le procédé selon l'invention est supérieure à l'énergie récupérée par le procédé selon l'art antérieur AA. Le procédé selon l'invention permet donc bien une récupération d'énergie optimisée même dans le pire cas de fonctionnement du système houlomoteur.

**Revendications**

1. Procédé de commande d'un système houlomoteur qui convertit l'énergie de la houle en énergie électrique ou hydraulique, ledit système houlomoteur comportant au moins un moyen mobile (2) en liaison avec une machine de conversion (1) de l'énergie, et ledit moyen mobile (2) effectuant un mouvement oscillatoire par rapport à ladite machine de conversion (1), **caractérisé en ce qu'**on réalise les étapes suivantes :

   a) on mesure la position et/ou la vitesse et/ou l'accélération dudit moyen mobile (2) ;
   b) on estime la force exercée par la houle sur ledit moyen mobile (2) au moyen de ladite mesure de ladite position et/ou de ladite vitesse dudit moyen mobile (2) ;
   c) on détermine au moins une fréquence dominante de la force exercée par ladite houle sur ledit moyen mobile (2), de préférence au moyen d'un filtre de Kalman non parfumé ;
   d) on détermine une valeur de commande de ladite force exercée par ladite machine de conversion (1) sur ledit moyen mobile (2) pour maximiser la puissance générée par ladite machine de conversion (1) en mettant en œuvre les étapes suivantes :

      i) pour ladite au moins une fréquence dominante déterminée, on détermine la résistance et la réactance intrinsèques dudit moyen mobile (2) et les intervalles d'incertitudes de la résistance et de la réactance intrinsèques de ladite machine de conversion (1) ;
      ii) on détermine au moins un coefficient d'une loi de commande à gain variable ayant une composante proportionnelle, au moyen d'une résolution d'un problème d'optimisation semi définie positive de ladite maximisation de ladite puissance générée par ladite machine de conversion, ledit problème d'optimisation semi définie positive prenant en compte lesdites résistances et réactance intrinsèques dudit moyen mobile et lesdits intervalles d'incertitudes de la résistance et de la réactance intrinsèques de ladite machine de conversion, ladite loi de commande à gain variable reliant ladite position et/ou ladite vitesse et/ou ladite accélération du moyen mobile à la force exercée par ladite machine de conversion sur ledit moyen mobile ; et

   e) on commande ladite machine de conversion (1) au moyen de ladite valeur de commande.

2. Procédé de commande selon la revendication 1, dans lequel ledit problème d'optimisation semi définie positive optimise le pire cas de fonctionnement dudit système houlomoteur défini au moyen desdits intervalles d'incertitudes.

3. Procédé de commande selon l'une des revendications précédentes, dans lequel ledit problème d'optimisation semi définie positive détermine au moins l'impédance de ladite loi commande, et on détermine ledit coefficient d'une loi de commande à partir de ladite impédance de ladite loi de commande.

4. Procédé de commande selon la revendication 3, dans lequel on détermine ledit problème d'optimisation semi définie positive par une équation du type : $\min\limits_{\gamma, R_c, X_c} \{\gamma\}$ , tel que

$$\begin{bmatrix} \gamma & R_i + R_m R_c - X_m X_c & X_i + R_m X_c + X_m R_c \\ R_i + R_m R_c - X_m X_c & R_m R_c - X_m X_c & 0 \\ X_i + R_m X_c + X_m R_c & 0 & R_m R_c - X_m X_c \end{bmatrix} \succcurlyeq 0,$$

$$\begin{bmatrix} \gamma & R_i + R_M R_c - X_M X_c & X_i + R_M X_c + X_M R_c \\ R_i + R_M R_c - X_M X_c & R_M R_c - X_M X_c & 0 \\ X_i + R_M X_c + X_M R_c & 0 & R_M R_c - X_M X_c \end{bmatrix} \succcurlyeq 0,$$

avec $R_i$ la résistance dudit moyen mobile, $X_i$ la réactance interne dudit moyen mobile, $R_m$ la borne inférieure de l'incertitude de la résistance de ladite machine de conversion, $R_M$ la borne supérieure de l'incertitude de la résistance de ladite machine de conversion, $R_c$ la partie réelle de l'impédance de ladite loi de commande, $X_c$ la partie imaginaire de l'impédance de ladite loi de commande, $X_m$ la borne inférieure de l'incertitude de la réactance interne de ladite machine de conversion, $X_M$ la borne supérieure de l'incertitude de la réactance interne de ladite machine de conversion.

**5.** Procédé de commande selon l'une des revendications 3 ou 4, dans lequel ladite loi de commande est une loi de commande proportionnelle, et dans lequel on détermine ledit coefficient $K_p$ de ladite loi de commande par une équation du type $K_p^*(\widehat{\omega}_{ex}) = R_c^*(\widehat{\omega}_{ex})$ avec $\widehat{\omega}_{ex}$ la fréquence dominante de la houle déterminée, $K_p^*$ la valeur optimale dudit coefficient $K_p$ et $R_c^*$ la valeur optimale de la partie réelle de l'impédance de ladite loi de commande.

**6.** Procédé de commande selon la revendication 5, dans lequel ladite loi de commande proportionnelle s'écrit : $f_u(t) = K_p v(t)$ avec $f_u$ la force appliquée par ladite machine de conversion sur ledit moyen mobile, et v la vitesse dudit moyen mobile par rapport à ladite machine de conversion.

**7.** Procédé de commande selon l'une des revendications 3 ou 4, dans lequel ladite loi de commande est une loi de commande proportionnelle-intégrale, et dans lequel on détermine lesdits coefficients $K_p$ et $K_i$ de ladite loi de commande à partir des équations du type $\begin{cases} K_p^*(\widehat{\omega}_{ex}) = R_c^*(\widehat{\omega}_{ex}) \\ K_i^*(\widehat{\omega}_{ex}) = -\widehat{\omega}_{ex} X_c^*(\widehat{\omega}_{ex}) \end{cases}$ avec $\widehat{\omega}_{ex}$ la fréquence dominante de la houle déterminée, $K_p^*$ la valeur optimale dudit coefficient $K_p$, $R_c^*$ la valeur optimale de la partie réelle de l'impédance de ladite loi de commande, $K_i^*$ la valeur optimale dudit coefficient $K_i$ et $X_c^*$ la valeur optimale de la partie imaginaire de l'impédance de ladite loi de commande.

**8.** Procédé de commande selon la revendication 7, dans lequel ladite loi de commande PI s'écrit par une équation du type :
$f_u(t) = K_p v(t) + K_i p(t)$ avec $f_u(t)$ la commande de la force exercée par ladite machine de conversion sur ledit moyen mobile, v(t) la vitesse dudit moyen mobile, p(t) la position dudit moyen mobile.

**9.** Procédé de commande selon l'une des revendications précédentes, dans lequel on maximise ladite puissance générée par ladite machine de conversion en prenant en compte le rendement de ladite machine de conversion.

**10.** Procédé de commande selon l'une des revendications précédentes, dans lequel on détermine la fréquence dominante de ladite force exercée par ladite houle sur ledit moyen mobile au moyen d'une modélisation de ladite force exercée par la houle sur ledit moyen mobile comme un signal sinusoïdal, ou comme la somme de deux signaux sinusoïdaux.

**11.** Procédé de commande selon l'une des revendications précédentes, dans lequel on estime la position et/ou la vitesse dudit moyen mobile en utilisant un modèle dynamique qui représente l'évolution de la position et de la vitesse du moyen mobile.

**12.** Procédé de commande selon la revendication 11, dans lequel ledit modèle dynamique comporte un modèle de la force de radiation.

**13.** Procédé de commande selon l'une des revendications précédentes, dans lequel ladite machine de conversion (1) est une machine électrique ou une machine hydraulique.

**14.** Système houlomoteur qui convertit l'énergie de la houle en énergie électrique ou hydraulique, ledit système houlomoteur comportant au moins un moyen mobile (2) en liaison avec une machine de conversion (1) de l'énergie, et ledit moyen mobile (2) effectuant un mouvement oscillatoire par rapport à ladite machine de conversion (1), **caractérisé en ce que** ledit système houlomoteur comprend des moyens de commande du système houlomoteur apte à mettre en œuvre le procédé de commande selon l'une des revendications précédentes.

**Patentansprüche**

**1.** Steuerungsverfahren eines Wellenkraftwerks, das die Energie der Wellen in elektrische oder hydraulische Energie umwandelt, wobei das Wellenkraftwerk mindestens eine bewegliche Einrichtung (2) in Verbindung mit einer Maschine zur Umwandlung (1) der Energie umfasst und wobei die mobile Einrichtung (2) eine oszillierende Bewegung in Bezug auf die Umwandlungsmaschine (1) ausführt, **dadurch gekennzeichnet, dass** die folgenden Schritte durchgeführt werden:

a) Messen der Position und/oder der Geschwindigkeit und/oder der Beschleunigung der mobilen Einrichtung (2);
b) Ermitteln der Kraft, die die Wellen auf die mobile Einrichtung (2) ausüben, mittels der Messung der Position und/oder der Geschwindigkeit der mobilen Einrichtung (2);
c) Bestimmen mindestens einer dominanten Frequenz der durch die Wellen auf die mobile Einrichtung (2) ausgeübten Kraft, vorzugsweise mittels eines Unscented-Kalman-Filters;
d) Bestimmen eines Werts zur Steuerung der durch die Umwandlungsmaschine (1) auf die mobile Einrichtung (2) ausgeübten Kraft, um die durch die Umwandlungsmaschine (1) generierte Leistung zu maximieren, indem die folgenden Schritte umgesetzt werden:

i) für die mindestens eine bestimmte dominante Frequenz, Bestimmen des intrinsischen Widerstands und der intrinsischen Reaktanz der mobilen Einrichtung (2) und der Unsicherheitsintervalle des intrinsischen Widerstands und der intrinsischen Reaktanz der Umwandlungsmaschine (1);
ii) Bestimmen mindestens eines Koeffizienten eines Steuerungsgesetzes mit variabler Verstärkung, das einen Proportionalanteil aufweist, mittels einer Lösung eines positiv semidefiniten Problems zur Optimierung der Maximierung der durch die Umwandlungsmaschine generierten Leistung, wobei das positiv semidefinite Optimierungsproblem die intrinsischen Widerstände und die intrinsische Reaktanz der mobilen Einrichtung und die Unsicherheitsintervalle des intrinsischen Widerstands und der intrinsischen Reaktanz der Umwandlungsmaschine berücksichtigt, wobei das Steuerungsgesetz mit variabler Verstärkung die Position und/oder die Geschwindigkeit und/oder die Beschleunigung der mobilen Einrichtung mit der durch die Umwandlungsmaschine auf die mobile Einrichtung ausgeübten Kraft verbindet; und

e) Steuern der Umwandlungsmaschine (1) mittels des Steuerungswerts.

2. Steuerungsverfahren nach Anspruch 1, wobei das positiv semidefinite Optimierungsproblem den schlimmstmöglichen Betriebsfall des Wellenkraftwerks, der mittels der Unsicherheitsintervalle definiert wird, optimiert.

3. Steuerungsverfahren nach einem der vorhergehenden Ansprüche, wobei das positiv semidefinite Optimierungsproblem mindestens die Impedanz des Steuerungsgesetzes bestimmt und wobei der Koeffizient eines Steuerungsgesetzes anhand der Impedanz des Steuerungsgesetzes bestimmt wird.

4. Steuerungsverfahren nach Anspruch 3, wobei das positiv semidefinite Optimierungsproblem durch eine Gleichung des folgenden Typs bestimmt wird: $\min_{\gamma, R_c, X_c}\{y\}$, wie etwa

$$\begin{bmatrix} \gamma & R_i + R_m R_c - X_m X_c & X_i + R_m X_c + X_m R_c \\ R_i + R_m R_c - X_m X_c & R_m R_c - X_m X_c & 0 \\ X_i + R_m X_c + X_m R_c & 0 & R_m R_c - X_m X_c \end{bmatrix} \geq 0,$$

$$\begin{bmatrix} \gamma & R_i + R_M R_c - X_M X_c & X_i + R_M X_c + X_M R_c \\ R_i + R_M R_c - X_M X_c & R_M R_c - X_M X_c & 0 \\ X_i + R_M X_c + X_M R_c & 0 & R_M R_c - X_M X_c \end{bmatrix} \geq 0,$$

wobei $R_i$ der Widerstand der mobilen Einrichtung ist, $X_i$ die interne Reaktanz der mobilen Einrichtung ist, $R_m$ die untere Grenze der Unsicherheit des Widerstands der Umwandlungsmaschine ist, $R_M$ die obere Grenze der Unsicherheit des Widerstands der Umwandlungsmaschine ist, $R_c$ der Realteil der Impedanz des Steuerungsgesetzes ist, $X_c$ der Imaginärteil der Impedanz des Steuerungsgesetzes ist, $X_m$ die untere Grenze der Unsicherheit der internen Reaktanz der Umwandlungsmaschine ist, $X_M$ die obere Grenze der Unsicherheit der internen Reaktanz der Umwandlungsmaschine ist.

5. Steuerungsverfahren nach einem der Ansprüche 3 oder 4, wobei das Steuerungsgesetz ein Proportional-Steuerungsgesetz ist und wobei der Koeffizient $K_p$ des Steuerungsgesetzes durch eine Gleichung vom Typ

$$K_p^*(\widehat{\omega}_{ex}) = R_c^*(\widehat{\omega}_{ex})$$ bestimmt wird, wobei $\overset{\wedge}{\omega}_{ex}$ die bestimmte dominante Frequenz der Wellen ist, $K_p^*$ der optimale Wert des Koeffizienten $K_p$ ist und $R_c^*$ der optimale Wert des Realteils der Impedanz des Steuerungsgesetzes ist.

6. Steuerungsverfahren nach Anspruch 5, wobei das Proportional-Steuerungsgesetz folgendermaßen ausgedrückt wird: $f_u(t) = K_p v(t)$ , wobei $f_u$ die durch die Umwandlungsmaschine auf die mobile Einrichtung angewandte Kraft ist und $v$ die Geschwindigkeit der mobilen Einrichtung mit Bezug auf die Umwandlungsmaschine ist.

7. Steuerungsverfahren nach einem der Ansprüche 3 oder 4, wobei das Steuerungsgesetz ein Integral-Proportional-Steuerungsgesetz ist und wobei die Koeffizienten $K_p$ und $K_i$ des Steuerungsgesetzes anhand von Gleichungen des folgenden Typs bestimmt werden: $$\begin{cases} K_p^*(\widehat{\omega}_{ex}) = R_c^*(\widehat{\omega}_{ex}) \\ K_i^*(\widehat{\omega}_{ex}) = -\widehat{\omega}_{ex} X_c^*(\widehat{\omega}_{ex}) \end{cases}$$ , wobei $\overset{\wedge}{\omega}_{ex}$ die bestimmte dominante Frequenz der Wellen ist, $K_p^*$ der optimale Wert des Koeffizienten $K_p$ ist, $R_c^*$ der optimale Wert des Realteils der Impedanz des Steuerungsgesetzes ist, $K_i^*$ der optimale Wert des Koeffizienten $K_i$ ist und $X_c^*$ der optimale Wert des Imaginärteils der Impedanz des Steuerungsgesetzes ist.

8. Steuerungsverfahren nach Anspruch 7, wobei das PI-Steuerungsgesetz durch eine Gleichung des folgenden Typs ausgedrückt wird:
$f_u(t) = K_p v(t) + K_i p(t)$ , wobei $f_u(t)$ die Steuerung der durch die Umwandlungsmaschine auf die mobile Einrichtung ausgeübten Kraft ist, $v(t)$ die Geschwindigkeit der mobilen Einrichtung ist, $p(t)$ die Position der mobilen Einrichtung ist.

9. Steuerungsverfahren nach einem der vorhergehenden Ansprüche, wobei die durch die Umwandlungsmaschine generierte Leistung unter Berücksichtigung des Wirkungsgrades der Umwandlungsmaschine maximiert wird.

10. Steuerungsverfahren nach einem der vorhergehenden Ansprüche, wobei die dominante Frequenz der durch die Wellen auf die mobile Einrichtung ausgeübten Kraft mittels einer Modellierung der durch die Wellen auf die mobile Vorrichtung ausgeübten Kraft in Form eines Sinussignals oder in Form der Summe von zwei Sinussignalen bestimmt wird.

11. Steuerungsverfahren nach einem der vorhergehenden Ansprüche, wobei die Position und/oder die Geschwindigkeit der mobilen Einrichtung unter Verwendung eines dynamischen Modells ermittelt wird, welches die Veränderung der Position und der Geschwindigkeit der mobilen Einrichtung darstellt.

12. Steuerungsverfahren nach Anspruch 11, wobei das dynamische Modell ein Modell der Strahlungskraft umfasst.

13. Steuerungsverfahren nach einem der vorhergehenden Ansprüche, wobei die Umwandlungsmaschine (1) eine elektrische Maschine oder eine hydraulische Maschine ist.

14. Wellenkraftwerk, das die Energie der Wellen in elektrische oder hydraulische Energie umwandelt, wobei das Wellenkraftwerk mindestens eine bewegliche Einrichtung (2) in Verbindung mit einer Maschine zur Umwandlung (1) der Energie umfasst und wobei die mobile Einrichtung (2) eine oszillierende Bewegung in Bezug auf die Umwandlungsmaschine (1) ausführt, **dadurch gekennzeichnet, dass** das Wellenkraftwerk Einrichtungen zur Steuerung des Wellenkraftwerks beinhaltet, die in der Lage sind, das Steuerungsverfahren nach einem der vorhergehenden Ansprüche umzusetzen.

## Claims

1. Method for controlling a wave-energy-converter system that converts the energy of sea swell into electrical or hydraulic energy, said wave-energy-converter system comprising at least one movable means (2) linked to a power take-off (1), and said movable means (2) making an oscillatory movement with respect to said power take-off (1), **characterized in that** the following steps are carried out:

a) the position and/or speed and/or acceleration of said movable means (2) are/is measured;
b) the force exerted by the swell on said movable means (2) is estimated by means of said measurement of said position and/or said speed of said movable means (2);
c) at least one dominant frequency of the force exerted by said swell on said movable means (2) is determined, preferably by means of an unscented Kalman filter;
d) a control value is determined for said force exerted by said power take-off (1) on said movable means (2) in order to maximize the power generated by said power take-off (1) by implementing the following steps:

i) for said at least one determined dominant frequency, the intrinsic resistance and reactance of said movable means (2) and the uncertainty intervals of the intrinsic resistance and reactance of said power take-off (1) are determined;
ii) at least one coefficient of a variable-gain control law having a proportional component is determined by means of solution of a problem of semidefinite-positive optimization of said maximization of said power generated by said power take-off, said semidefinite-positive optimization problem taking into account said intrinsic resistances and reactance of said movable means and said uncertainty intervals of the intrinsic resistance and reactance of said power take-off, said variable-gain control law relating said position and/or said speed and/or said acceleration of the movable means to the force exerted by said power take-off on said movable means; and

e) said power take-off (1) is controlled by means of said control value.

2. Control method according to Claim 1, wherein said semidefinite-positive optimization problem optimizes the worst case of operation of said wave-energy-converter system, which is defined by means of said uncertainty intervals.

3. Control method according to one of the preceding claims, wherein said semidefinite-positive optimization problem determines at least the impedance of said control law, and said coefficient of a control law is determined from said impedance of said control law.

4. Control method according to Claim 3, wherein said semidefinite-positive optimization problem is defined by an equation of the type: $\min\limits_{\gamma, R_c, X_c} \{\gamma\},$ such that

$$\begin{bmatrix} \gamma & R_i + R_m R_c - X_m X_c & X_i + R_m X_c + X_m R_c \\ R_i + R_m R_c - X_m X_c & R_m R_c - X_m X_c & 0 \\ X_i + R_m X_c + X_m R_c & 0 & R_m R_c - X_m X_c \end{bmatrix} \succcurlyeq 0,$$

$$\begin{bmatrix} \gamma & R_i + R_M R_c - X_M X_c & X_i + R_M X_c + X_M R_c \\ R_i + R_M R_c - X_M X_c & R_M R_c - X_M X_c & 0 \\ X_i + R_M X_c + X_M R_c & 0 & R_M R_c - X_M X_c \end{bmatrix} \succcurlyeq 0,$$

where $R_i$ is the resistance of said movable means, $X_i$ is the internal reactance of said movable means, $R_m$ is the lower limit of the uncertainty in the resistance of said power take-off, $R_M$ is the upper limit of the uncertainty in the resistance of said power take-off, $R_c$ is the real part of the impedance of said control law, $X_c$ is the imaginary part of the impedance of said control law, $X_m$ is the lower limit of the uncertainty in the internal reactance of said power take-off, and $X_M$ is the upper limit of the uncertainty in the internal reactance of said power take-off.

5. Control method according to either of Claims 3 and 4, wherein said control law is a proportional control law, and wherein said coefficient $K_p$ of said control law is determined via an equation of the type $K_p^*(\widehat{\omega}_{ex}) = R_c^*(\widehat{\omega}_{ex}),$

where $\widehat{\omega}_{ex}$ is the determined dominant frequency of the swell, $K_p^*$ is the optimal value of said coefficient $K_p$ and

$R_c^*$ is the optimal value of the real part of the impedance of said control law.

6. Control method according to Claim 5, wherein said proportional control law is written: $f_u(t) = K_p v(t)$ where $f_u$ is the force applied by said power take-off on said movable means, and v is the speed of said movable means with respect to said power take-off.

7. Control method according to either of Claims 3 and 4, wherein said control law is a proportional-integral control law, and wherein said coefficients $K_p$ and $K_i$ of said control law are determined from the equations of the type

$$\begin{cases} K_p^*(\widehat{\omega}_{ex}) = R_c^*(\widehat{\omega}_{ex}) \\ K_i^*(\widehat{\omega}_{ex}) = -\widehat{\omega}_{ex} X_c^*(\widehat{\omega}_{ex}) \end{cases}$$

where $\widehat{\omega}_{ex}$ is the determined dominant frequency of the swell, $K_p^*$ is the optimal value of said coefficient $K_p$, $R_c^*$ is the optimal value of the real part of the impedance of said control law, $K_i^*$ is the optimal value of said coefficient $K_i$ and $X_c^*$ is the optimal value of the imaginary part of the impedance of said control law.

8. Control method according to Claim 7, wherein said PI control law is written in the form of an equation of the type: $f_u(t) = K_p v(t) + K_i p(t)$ where $f_u(t)$ is the control of the force exerted by said power take-off on said movable means, v(t) is the speed of said movable means, and p(t) is the position of said movable means.

9. Control method according to one of the preceding claims, wherein said power generated by said power take-off is maximized by taking into account the efficiency of said power take-off.

10. Control method according to one of the preceding claims, wherein the dominant frequency of said force exerted by said swell on said movable means is determined by means of a model modelling said force exerted by the swell on said movable means as a sinusoidal signal, or as the sum of two sinusoidal signals.

11. Control method according to one of the preceding claims, wherein the position and/or speed of said movable means is estimated using a dynamic model that models the variation in the position and speed of the movable means.

12. Control method according to Claim 11, wherein said dynamic model comprises a model of the radiation force.

13. Control method according to one of the preceding claims, wherein said power take-off (1) is an electric machine or a hydraulic machine.

14. Wave-energy-converter system that converts the energy of sea swell into electrical or hydraulic energy, said wave-energy-converter system comprising at least one movable means (2) linked to a power take-off (1), and said movable means (2) making an oscillatory movement with respect to said power take-off (1), **characterized in that** said wave-energy-converter system comprises means for controlling the wave-energy-converter system able to implement the control method according to one of the preceding claims.

$p, v$ → [ EST ] $\hat{f}_{ex}$ → [ FDO ] $\widehat{\omega}_{ex}$ → [ COEFF ] $f_u$ → [ COM ]

**Figure 1**

2 → WEC
v(t)
p(t)
u(t)
1 → PTO
3

**Figure 2**

**Figure 3**

**Figure 4**

Figure 5

Figure 6

Figure 7

Figure 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876751
- FR 2973448
- WO 2009081042 A
- FR 3019235
- US 20170214347 A
- FR 1752337
- FR 3049989
- WO 2017174244 A

**Littérature non-brevet citée dans la description**

- **RINGWOOD, J.V.** Control optimisation and parametric design, dans Numerical Modelling of Wave Energy Converters: State-of-the art techniques for single WEC and converter arrays. Elsevier, 2016
- **WHITTAKER, T. ; COLLIER, D. ; FOLLEY, M. ; OSTERRIED, M. ; HENRY, A. ; CROWLEY, M.** The development of Oyster-a shallow water surging wave energy converter. *Proceedings of the 7th European Wave and Tidal Energy Conference,* Septembre 2007, 11-14
- **HANSEN, RICO H ; KRAMER, MORTEN M.** Modelling and control of the Wavestar prototype. *Proceedings of 2011 European Wave and Tidal Energy Conférence,* 2011
- **HALS, J. ; FAINES, J. ; MOAN, T.** A Comparison of Selected Stratégies for Adaptive Control of Wave Energy Converters. *J. Offshore Mech. Arct. Eng.,* 2011, vol. 133.3
- A simple and effective real-time controller for wave energy converters. **FRANCESCO FUSO et al.** IEEE transactions on sustainable energy. IEEE, 01 Janvier 2013, vol. 4, 21-30
- **FAINES, J.** Ocean waves and oscillating systems: linear interactions including wave energy extraction. Cambridge university press, 2002